# EUROPEAN PATENT APPLICATION

(11) **EP 1 811 189 A1**
(43) Date of publication of application: **25.07.2007**
(21) Application number: 04791976.6
(22) Date of filing: 01.10.2004
(51) Int. Cl.: F16C 29/06

(54) **LINEAR GUIDE DEVICE**

(71) Applicant: NSK LTD., Shinagawa-ku, Tokyo 141-8560 (JP); NSK Precision Co., Ltd., Tokyo 141-8560 (JP)
(72) Inventor: FUJIMURA, Nobuaki;, Hanyu-shi, Saitama;3488506 (JP)
(74) Representative: Klingseisen, Franz
(86) International application number: PCT/JP2004/014509
(87) International publication number: WO 2006/038269

(57) **Abstract**

A linear guide device having an appropriate length of a loaded rolling element rolling groove capable of stably suppressing rolling element passage vibrations is provided. In a linear guide device including an axially extending guide rail 1 having rolling element rolling grooves 3 on both sides, a slider 2 bridged over the guide rail 1 and comprising a slider main body 2A having loaded rolling element rolling grooves 31 opposed to the rolling element rolling grooves 3 and having rolling element channels 8 penetrating in the axial direction and end caps 5 fixed to both ends of the slider main body 2A and each having a rolling element circulation channel 6 for communicating both of the rolling element rolling grooves 3, 31 and the rolling element channels 8, and plural rolling elements B arranged such that they can circulate under rolling through both of the rolling element rolling grooves 3, 31, the rolling element circulation channels 6 and the rolling element channels 8, the length of the loaded rolling element rolling groove 31 of the slider main body 24 is defined as 23 to 32 times the diameter of the rolling element B.

## Description

### Technical Field

The present invention concerns a linear guide apparatus used suitably to machine equipments requiring high processing accuracy or measuring accuracy such as mold processing machines or semiconductor manufacturing apparatus.

### Background Art

A linear guide device for guiding a body to be guided linearly while circulating rolling elements such as balls infinitely in the inside is one of important machine elements that give a significant effect on the moving accuracy of semiconductor manufacturing apparatus, super-fine processing machines and super-fine measuring instruments. Then, the moving accuracy of such equipments depends on the linearity of a guide rail or a base surface mounted thereto, and periodical fine vibrations generated along with infinite circulation of rolling elements (hereinafter referred to as rolling element passage vibrations) in the linear guide device.

The rolling element passage vibrations are generated upon release of a load on rolling elements that roll between a rolling element rolling groove of a guide rail and a loaded rolling element rolling groove of a slider while undergoing the load by a preload or external load when they go out to a rolling element circulation channel of an end cap as a non-loading area, and also upon loading of a load on rolling elements when they enter from the non-load area to the loading area.
For suppressing such rolling element passage vibrations, a linear guide device has been proposed in which a slider main body is formed as a not-divisional one-piece integral structure and the entire length of the loaded rolling element rolling groove is made 20 to 50 times the diameter of the roiling element (refer, for example, to patent document 1).
Patent document 1: Japanese Patent Unexamined Publication No. 2000-46052. In the linear guide device described in the patent document 1, since the entire length of the loaded rolling element rolling groove of the slider main body is made 20 to 50 times the diameter of the rolling element, assuming the diameter of the rolling element as 4.762 mm, the entire length of the loaded rolling element rolling groove of the slider main body is 95.24 mm in a case of 20 times length and 238.1 mm in a case of 50 times length. Therefore, the selection range for the entire length of the loaded rolling element rolling groove which is effective to suppression of the rolling element passage vibrations ranges for about 143 m (239.1 to 95.24 mm), and selection for the appropriate length of the loaded rolling element rolling groove for stably suppressing the rolling element passage vibrations is difficult and inefficient.

That is, the length of the loaded rolling element rolling groove which is excessively longer than required increases the size of the entire device, whereas setting of the loaded rolling element rolling groove length to the lower limit (95.24 mm) is sometimes insufficient for stably suppressing the rolling element passage vibrations depending on the case.
The present invention has been accomplished for overcoming such a disadvantage and it intends to provide a linear guide device having an appropriate length of a loaded rolling element rolling groove capable of stably suppressing rolling element passage vibrations.

### Disclosure of the Invention

For attaining the foregoing object, the invention according to claim 1 has a feature in a linear guide device including an axially extending guide rail having rolling element rolling grooves on both sides, a slider bridged over the guide rail and comprising a slider main body having loaded rolling element rolling grooves opposed to the rolling element rolling grooves of the guide rail and having rolling element channels penetrating in the axial direction, and end caps fixed to both ends of the slider main body and having rolling element circulation channels for communicating both of the rolling element rolling grooves and the rolling element channels, and plural rolling elements arranged such that they can circulate under rolling through both of the rolling element rolling grooves, the rolling element circulation channels and the rolling element channels, characterized in that
the length of the loaded rolling element rolling groove of the slider main body is defined as 23 to 32 times the diameter of the rolling element.

### Brief Description of the drawings

Fig. 1 is a partially cut-away perspective view for explaining a linear guide device as an example of a preferred embodiment according to the present invention.
Fig. 2 is a cross sectional view for a main portion of Fig. 1.
Fig. 3 is a graph showing a relation between the number of effective rolling elements and the displacement component of rolling element passage vibrations in a case of a ball diameter of 4.762 mm on each preload.
Fig. 4 is a graph showing a relation between the number of effective rolling elements and the displacement component of rolling element passage vibrations in a case of a ball diameter of 5.556 mm on each preload.

### Description for references

- 1: guide rail,
- 2: slider,
- 2A: slider main body,
- 3: rolling element rolling groove,
- 5: end pap,
- 6: rolling element circulation channel,
- 8: rolling element channel,
- 31: loaded rolling element rolling groove,
- B: ball (rolling element).

### Best Mode For Practicing the Invention

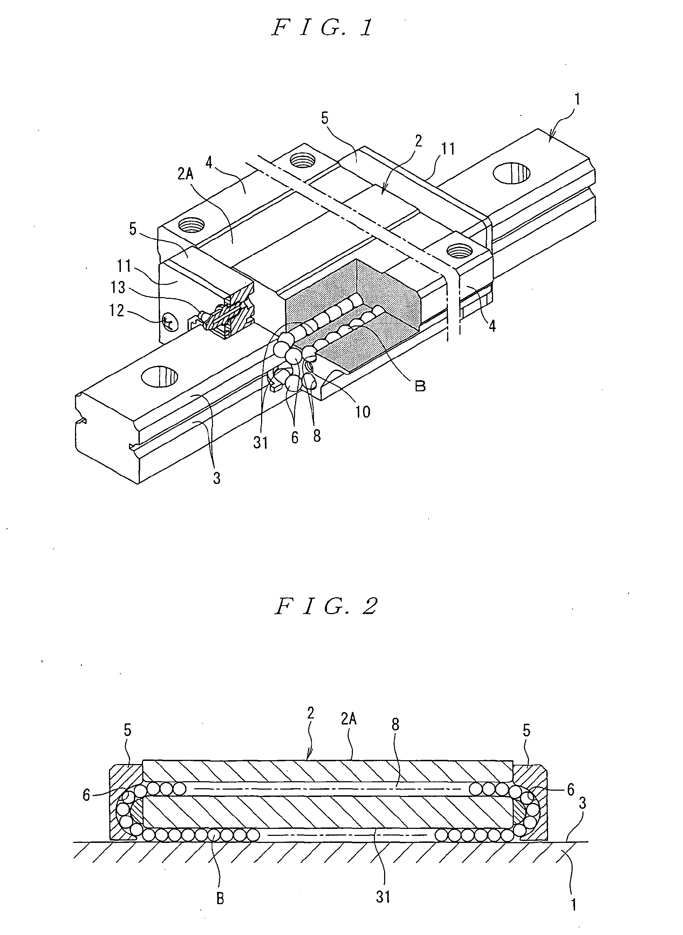

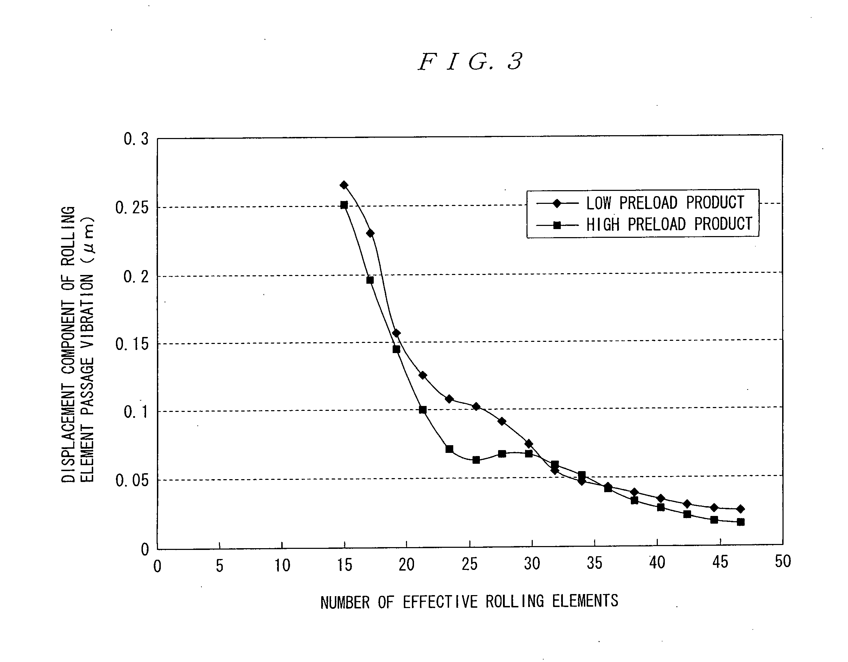

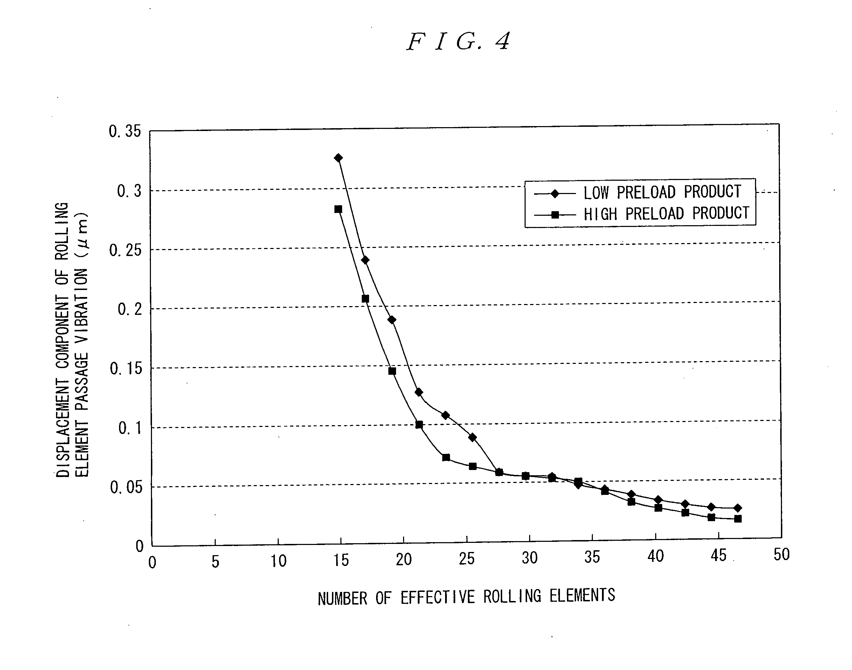

An example of a preferred embodiment is to be described with reference to the drawings. Fig. 1 is a partially cut-away perspective view for explaining a linear guide device as an example of a preferred embodiment according to the present invention, Fig. 2 is a cross sectional view for a main portion of Fig. 1, Fig. 3 is a graph showing a relation between the number of effective rolling elements and the displacement component of rolling element passage vibrations in a case of a ball diameter of 4.762 mm on each preload, and Fig. 4 is a graph showing a relation between the number of effective rolling elements and the displacement component of rolling element passage vibrations in a case of a ball diameter of 5.556 mm on each preload.

The linear guide device as an example of the preferred embodiment according to the invention comprises, as shown in Fig. 1 and Fig. 2, an axially extending guide rail 1 and a slider 2 which is bridged over the guide rail 1 relatively moveably in the axial direction.
Rolling element rolling grooves 3 each extending in the axial direction are formed on both lateral surfaces of the guide rail 1, and loaded rolling element rolling grooves 31 opposed to the rolling element rolling grooves 3 respectively are formed to the inner lateral surfaces of both sleeves 4 thereof in the slider main body 2A of the slider 2, and rolling element channels 8 penetrating in the axial direction are formed in the sleeves 4.

Further, end caps 5 each having a rolling element circulation channel 6 curved in a semi-arcuate shape for communicating both of the rolling element rolling grooves 3, 31 and the rolling element channel 8 are fixed on both front and rear ends of the slider main body 2A by way of screws 12. Both of the rolling element rolling grooves 3, 31, the rolling element circulation channels 6 and the rolling element channels 8 constitute infinite rolling element circulation tracks.
Then, a plurality of balls B as rolling elements are placed in the infinite rolling element circulation tracks, and the slider can move relatively along the axial direction on the guide rail 1 by way of the rolling of the balls B. In the drawings, reference 10 is a tap hole for screw-setting the end cap 5 to the end face of the slider main body 2A, 11 is a side seal and 13 is an oil feeding nipple disposed to the lateral surface, end face, etc. of the end cap.

In this embodiment, the slider main body 2A has a non-divisional one-piece structure and the number of effective rolling elements which is a value obtained by dividing the length of the loaded rolling element rolling groove 31 with the diameter of the ball B (length of loaded rolling element rolling groove/diameter of rolling element = number of effective rolling elements) is defined as from 23 to 32. In this embodiment, the loaded rolling element rolling groove 31 is applied with a super-fine grinding fabrication to make the roughness of the groove surface to 0.2 µmRa or less and, while the ball B according to JIS class G3 is used, this is not always restricted thereto but a usual steel ball may also be used for the ball B.

Fig. 3 shows a relation between the amount of the displacement component (µm) of rolling element passage vibrations and the number of effective rolling elements in a case of the ball diameter of 4.762 mm plotted on each preload which is considered to give a significant effect on rolling element passage vibrations.
It can be seen from Fig. 3 that the rolling element passage vibrations are decreased about from the number of effective rolling elements of 20 on each preload, as shown in Japanese Unexamined Patent Publication No. 2000-40652, but scattering can be observed depending on the preload and the decrement for the amount of the displacement component of the rolling element passage vibrations is moderated at the number of effective rolling elements of 23, which is found to be a stable region for suppressing the rolling element passage vibrations. Further, the displacement component due to the increase of the number of balls transits along a moderate gradient after exceeding the number of effective rolling elements of 32, which is small as a numerical value.

As described above, it can be confirmed that the effect of suppressing the rolling element passage vibrations is obtained by defining the entire length of the loaded rolling element groove 31 to 23 to 32 times the ball diameter. As shown in Fig. 4, in a case where the ball diameter is 5.556 mm, the decrement for the amount of the displacement component of the rolling element passage vibrations is also moderated from the number of effective rolling elements of 23 although different depending on the amount of preload, which shows a stable region for suppressing the rolling element passage vibrations

Accordingly, in view of the relation between the rolling element passage vibrations and the number of effective rolling elements depending on the difference of the diameter of balls used in the linear guide device, since a region having a stable effect of suppressing the rolling element passage vibrations is present between 23 to 32 for the number of effective rolling elements, it is possible to provide a linear guide device capable of suppressing the rolling element passage vibrations by defining the entire length of the loaded rolling element rolling groove 31 to 23 to 32 times the diameter of the ball.

As described above in this embodiment, since an appropriate length of the loaded rolling element rolling groove 31 (slider main body 2A) capable of stably suppressing the rolling element passage vibrations can be selected, an efficient device design can be conducted and the length of the slider 2 which is effective to the stable suppression of the rolling element passage vibrations can be standardized.
The present invention is not restricted to the embodiment described above but can be property modified within a range not departing the gist of the invention.

For example, in the embodiment described above, while the ball is shown as an example of the rolling element, this is not limitative but the present invention is of course applicable to a linear guide device using a rolling element such as a cylindrical roller, a cone roller or a spherical roller.

### Industrial Applicability

As apparent from the foregoing explanations according to the present invention, since an appropriate length of the loaded rolling element rolling groove (slider main body) capable of stably suppressing the rolling element passage vibrations can be selected, efficient device design can be made and the length of the slider which is effective to the stable suppression of the rolling element passage vibrations can be standardized.

## Claims

1. A linear guide device including an axially extending guide rail having rolling element rolling grooves on both sides, a slider bridged over the guide rail and comprising a slider main body having loaded rolling element rolling grooves opposed to the rolling element rolling grooves of the guide rail and having rolling element channels penetrating in the axial direction, and end caps fixed to both ends of the slider main body and having rolling element circulation channels for communicating both of the rolling element rolling grooves and the rolling element channels, and plural rolling elements arranged such that they can circulate under rolling through both of the rolling element rolling grooves, the rolling element circulation channels and the rolling element channels,
**characterized in that**
the length of the loaded rolling element rolling groove of the slider main body is defined as 23 to 32 times the diameter of the rolling element.
